# FASCICULE DE BREVET EUROPEEN

(11) **EP 1 194 474 B1**
(45) Date de publication et mention de la délivrance du brevet: **21.01.2004**
(21) Numéro de dépôt: 00938898.4
(22) Date de dépôt: 08.06.2000
(51) Int. Cl.: C08G 69/28, C08G 69/04

(54) **PROCEDE DE FABRICATION DE POLYAMIDES**
VERFAHREN ZUR HERSTELLUNG VON POLYAMIDEN
METHOD FOR MAKING POLYAMIDES

(30) Priorité: 11.06.1999 FR 9907647
(43) Date de publication de la demande: 10.04.2002
(73) Titulaire: Rhodianyl, 92512 Boulogne-Billancourt Cédex (FR)
(72) Inventeur: THIERRY, Jean-François, F-69340 Francheville (FR); HELFT, Matthieu, F-69003 Lyon (FR)
(74) Mandataire: Esson, Jean-Pierre
(86) Numéro de dépôt international: PCT/FR2000/001588
(87) Numéro de publication internationale: WO 2000/077075

(56) Documents cités:
- EP-A- 0 001 157
- EP-A- 0 364 376
- WO-A-96/16107
- WO-A-96/16108

## Description

La présente invention concerne un procédé de fabrication de polyamide.

Elle se rapporte plus particulièrement à la fabrication de polyamides issus de la réaction entre un diacide et une diamine.

Les polyamides sont des polymères présentant un intérêt industriel et commercial important. Les polyamides thermoplastiques sont obtenus soit par réaction entre deux monomères différents, soit par polycondensation d'un seul monomère. L'invention s'applique aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre jusqu'à 25 % en mole d'autres monomères diamines ou diacides ou même des monomères aminoacides ou lactames.

Cette classe de polyamides issus de deux monomères différents est généralement fabriquée en utilisant comme matière première, un sel acide d'amine obtenu par mélange en quantité stoechiométrique et dans un solvant comme l'eau d'un diacide avec une diamine.

Ainsi, dans la fabrication du poly(hexaméthylène adipamide), l'acide adipique est mélangé avec de l'hexaméthylène diamine dans de l'eau pour obtenir un adipate d'hexaméthylène diamine plus connu sous le nom de sel Nylon ou "Sel N".

La solution de sel N est éventuellement concentrée par évaporation de l'eau.

Le polyamide est obtenu par chauffage à température et pression élevées d'une telle solution de sel Nylon pour évaporer l'eau tout en évitant toute formation de phase solide pour éviter une prise en masse.

Cette opération consomme beaucoup d'énergie, mais également ne permet pas de contrôler totalement la stoechiométrie car de l'amine peut être évaporée ou entraînée par l'eau. Un tel entraînement ou évaporation requiert une maîtrise du procédé pour rétablir la stoechiométrie et peut être gênant car la diamine entraînée peut polluer les effluents rejetés par l'installation de production.

En outre, l'obligation de chauffer à une température élevée sous une pression élevée peut provoquer la formation de composés de dégradation qui polluent le polyamide fabriqué, notamment au niveau de sa couleur.

Pour éviter d'utiliser de l'eau, des procédés sans eau ont été proposés sans réel succès. En effet, il est très difficile de contrôler la stoechiométrie entre les deux réactifs quand l'un d'entre eux au moins est sous forme solide.

En outre, il est impossible d'introduire les réactifs sous forme liquide car au niveau de température nécessaire il se produit une dégradation des monomères.

Toutefois, il a déjà été proposé certains procédés de préparation d'un polyamide sans eau et sans solvant. Ainsi le brevet US 4.131.712 décrit un procédé consistant à mélanger à l'état liquide un mélange diamine/diacide riche en diacide avec un second mélange diamine/diacide riche en diamine de manière à obtenir une composition la plus proche de la stoechiométrie. Le mélange est maintenu à une température suffisante pour éviter toute solidification et réaliser la polycondensation. Toutefois, dans ce procédé il est difficile de contrôler et d'obtenir un mélange stoechiométrique car la diamine s'évapore partiellement pendant l'introduction du mélange riche en diamine.

Pour éviter cet inconvénient, un procédé de fabrication de polyamide sans eau ou solvant est décrit dans la demande de brevet WO 96/16107.

Ce procédé consiste à alimenter dans un premier étage d'un réacteur à plusieurs étages ou colonne à plateaux, un diacide ou un mélange diacide/diamine riche en diacide, puis introduire à un étage intermédiaire de la diamine ou un mélange diacide/diamine riche en diamine en contrôlant la quantité de diamine ajoutée pour obtenir un mélange stoechiométrique, la stoechiométrie étant mesurée en continu par un moyen d'analyse, par exemple une analyse par Proche Infra Rouge (PIR).

Ce procédé demande l'utilisation d'un réacteur spécial pour sa mise en oeuvre, dont le fonctionnement peut s'avérer difficile à contrôler. De plus, le contrôle de la stoechiométrie est assuré par l'addition de diamine ou d'un mélange diacide/diamine riche en diamine pouvant provoquer des variations d'amplitude élevée du rapport diacide/diamine et des variations du débit total dans le réacteur.

Un des buts de la présente invention est de proposer un procédé de fabrication de polyamide de haut poids moléculaire sans eau ni solvant permettant de contrôler la stoechiométrie, ce procédé pouvant être réalisé dans des réacteurs de conception simple. Le procédé est en outre facile à piloter.

A cet effet, l'invention propose un procédé de fabrication d'un polyamide issu de la réaction d'au moins un diacide avec au moins une diamine comprenant les étapes suivantes :
- préparer un premier mélange de diacide et de diamine avec un rapport molaire diacide/diamine compris entre 1,005 et 1,2, de préférence compris entre 1,01 et 1,05.
- préparer un second mélange de diacide et diamine avec un rapport diacide/diamine compris entre 0,8 et 0,995, de préférence compris entre 0,95 et 0,99.
- introduire sous forme fondue un premier flux du premier mélange et un second flux du second mélange dans un réacteur de polymérisation agité
- soutirer, de préférence en continu, dudit réacteur un flux de prépolymère polyamide
- introduire ledit flux de polyamide dans une étape de finition pour obtenir le degré de polymérisation désiré.

De préférence les premier et second mélanges sont anhydres. Par mélange anhydre il faut comprendre des mélanges qui peuvent contenir jusqu'à 10 % en poids d'eau.
Le terme anhydre est utilisé dans la présente description en opposition au procédé conventionnel qui utilise une solution aqueuse de sel NYLON.

Le procédé de l'invention comprend également un moyen d'analyse en continu du mélange des flux des premier et second mélanges, de préférence les deux flux pour déterminer l'équilibre entre les fonctions acides et amines. Par fonctions acides et amines on entend les fonctions totales acides et amines présentes, ayant réagi ou non. Ce procédé consiste à contrôler à partir du résultat de l'analyse précédente au moins un des premier et second flux de mélanges, de préférence les deux flux, pour obtenir un rapport entre les fonctions acides et amines égal à la valeur désirée selon le type de polyamide à fabriquer (à titre indicatif, la marge de variation acceptable de ce rapport par rapport à la valeur désirée est de plus ou moins 0,0005).

Selon un mode de réalisation préféré de l'invention, le moyen d'analyse est un dispositif d'analyse spectrométrique par Proche Infra Rouge (PIR).

Le procédé de l'invention permet donc d'obtenir un polyamide équilibré en contrôlant la stoechiométrie du mélange. De plus, comme l'ajustement ou le contrôle de cette stoechiométrie est réalisé par le contrôle des flux des premier et second mélanges, l'amplitude de la variation du rapport acide/amine sera, après le mélange des deux flux, faible, permettant d'obtenir une production plus homogène.

En outre, comme indiqué précédemment, le réacteur de polymérisation est un réacteur simple comprenant uniquement des moyens d'agitation et de chauffage conventionnels.

Les réacteurs où sont réalisés les premiers et deuxième mélanges ainsi que le réacteur de polymérisation peuvent par exemple être des réacteurs à agitation mécanique ou des réacteurs à recirculation externe. Dans ce dernier cas, l'alimentation en mélanges et/ou le sous tirage du produit et/ou un chauffage peuvent avantageusement être réalisés dans la boucle de recirculation. Le chauffage des réacteurs peut être réalisé à l'aide d'un dispositif de double enveloppe et éventuellement d'un serpentin interne. Les réacteurs peuvent de plus être ouverts aux gaz.

Selon une caractéristique préférée de l'invention, les premier et second mélanges de diacide et diamine sont préparés par mélange à l'état solide d'un diacide avec la diamine, en présence d'une faible quantité d'eau, puis chauffage à température modérée pour obtenir un sel d'amine.

Dans un autre mode de réalisation, les mélanges sont chauffés à une température plus élevée avec élimination d'eau pour obtenir des prépolymères à terminaison acide pour le premier mélange et terminaison amine pour le second mélange.

Le procédé de préparation de ces mélanges peut être analogue à celui décrit dans le brevet US 4.131.712 pour la préparation de mélanges riches en acide.

Dans une autre caractéristique préférée de l'invention l'étape de finition comprend une évaporation rapide de l'eau de condensation contenue dans le polyamide sortant du réacteur de polymérisation, obtenue par exemple, par détente du flux de polyamide.
Le polyamide est ensuite maintenu pendant un temps déterminé à une température de polymérisation sous pression atmosphérique ou réduite pour obtenir le degré de polymérisation désiré.

Ces dernières étapes de finition sont celles utilisées dans les procédés industriels de fabrication de polyamide à partir d'une solution aqueuse de sel d'amine.

Selon une nouvelle caractéristique de l'invention la polymérisation réalisée dans le réacteur de polymérisation est mise en oeuvre sous une pression autogène ou régulée pour éviter toute perte en diamine ou au moins les réduire au minimum.

Le procédé de l'invention peut être utilisé pour la fabrication de poly(hexaméthylène adipamide), à partir d'acide adipique comme monomère diacide et d'hexaméthylène diamine comme monomère diamine.

Le procédé de l'invention permet également de fabriquer d'autres polyamides à partir de monomère diacide choisi dans le groupe comprenant les acides glutarique, subérique, sébacique, dodécanedioïque, isophtalique, téréphtalique, azélaïque, pimélique, naphtaléne dicarboxylique, par exemple.

Comme monomères diamines, en plus de l'hexaméthylène diamine, on peut citer également l'heptaméthylène diamine, la tétraméthylène diamine, l'octaméthylène diamine, la nonaméthylène diamine, la décaméthylène diamine, la méthyl-2 pentaméthylène diamine, l'undécaméthylène diamine, la dodécaméthylène diamine, la xylylène diamine, l'isophorone diamine.

L'invention s'applique préférentiellement à la fabrication de polyamide à partir de monomères diacide et diamine dont au moins 80 % en mole sont respectivement l'acide adipique et l'hexaméthylène diamine.

Il est également possible de préparer des polyamides à partir de monomères diacide et diamine comprenant une faible proportion (inférieure à 20 % en mole) d'aminoacide ou de lactame. On peut ainsi citer la fabrication de copolyamide PA 6,6/6, à partir de monomères acide adipique/hexaméthylène diamine contenant une quantité déterminée de caprolactame. Ce monomère différent peut être présent dans les premier ou second mélanges ou uniquement dans l'un de ces mélanges.

Selon un mode préférentiel de réalisation de l'invention, les premier et second mélanges M2 et M3 sont préparés par mélange d'une solution de monomère diamine avec un mélange M1 riche en monomère diacide. Selon ce mode de réalisation, le débit des flux d'entrée de la solution de monomères diamines et du mélanges M1 riche en monomère diacide est asservi à la valeur du rapport diacide/diamine désiré pour chaque mélange M2 et M3, c'est-à-dire au résultat de l'analyse en continu des fonctions acides et amines dans chaque mélange M2 et M3.

Dans le mode de réalisation du procédé de fabrication de poly(hexaméthylène adipamide), les premier et second mélanges sont avantageusement préparés à partir d'un mélange acide adipique (AdOH) / hexaméthylène diamine (HMD) de composition voisine de l'eutectique, c'est-à-dire 19 % en poids de HMD et 81 % en poids de AdOH.

Ce mélange eutectique a un point de fusion voisin de 100°C.

Le mélange eutectique est introduit dans deux réacteurs dans lesquels est introduit de l'hexaméthylène diamine pour obtenir respectivement un premier mélange riche en diacide (rapport diacide / diamine compris entre 1,005 et 1,2) et un second mélange riche en diamine (rapport diacide / diamine compris entre 0,8 et 0,995).

Selon un autre mode de réalisation de l'invention, les premier et/ou second mélanges sont eux-mêmes obtenus par mélange de deux pré-mélanges de diacide et de diamine, dont les proportions sont comprises dans des fourchettes de 0,5% à 20% respectivement au dessus et au dessous de la valeur visée pour chaque mélange. Pour chaque mélange, on asservit les flux des deux pré-mélanges à la valeur du rapport désiré pour ledit mélange. Selon ce mode de réalisation, la précision des rapports de stoechiométrie des mélanges et leur contrôle sont améliorés. Selon ce mode de réalisation, le dispositif pour la mise en oeuvre de l'invention comprend une cascade de plusieurs étages de réacteurs, dans lesquels la précision de la stoechiométrie est de plus en plus importante. Le nombre d'étages de réacteurs peut être compris entre 1 et 10. Les pré-mélanges peuvent être eux-mêmes préparés de manière analogue à la préparation des mélanges, par exemple à partir d'un mélange AdOH/HMD de composition voisine de l'eutectique.

Avantageusement, les rapports diacide/diamine sont contrôlés par des analyses chimiques ou potentiométriques. Dans un mode de réalisation particulièrement préféré, ces rapports diacide / diamine sont déterminés par une analyse spectrométrique Proche Infra Rouge.

La température de préparation des mélanges est avantageusement supérieure à 200°C pour obtenir une réaction d'amidification et donc un prépolymère à terminaison acide ou amine selon le mélange.

Selon un mode de réalisation de l'invention, les premier et second mélanges ainsi obtenus sont soutirés des réacteurs en flux A et B distincts, ces deux flux sont rassemblés et introduits dans un réacteur de polymérisation agité.

II est possible de prévoir des mélangeurs statiques dans le conduit d'alimentation du réacteur de polymérisation et/ou un réacteur de prémélange.

Le débit de chaque flux A et B est déterminé pour obtenir un rapport entre les fonctions amines et acides le plus proche de la valeur désirée.

Selon l'invention, le débit des flux est contrôlé et ajusté par asservissement au résultat de l'analyse du rapport entre les fonctions acide et amine présentes soit dans la masse réactionnelle formée par le mélange des deux flux, par exemple dans le réacteur de prémélange ou après les mélangeurs statiques, soit dans la masse réactionnelle présente dans le réacteur de polymérisation ou en sortie dudit réacteur de polymérisation.

Le régulation des débits d'entrée dans les différents réacteurs peut être mise en oeuvre par l'intermédiaire des pompes ou de vannes de détente.

Pour obtenir une régulation efficace du rapport stoechiométrique, cette analyse des fonctions acides et amines est réalisée en continu par analyse spectrométrique Proche Infra Rouge. L'asservissement peut également être lié à la mesure de rapport de stoechiométrie dans les deux flux M2 et M3.

Cette technique d'analyse est notamment décrite dans le brevet US 5.155.184 pour la détermination d'une propriété d'un polymère tel qu'une polyoléfine. Elle consiste, brièvement, à mesurer l'absorbance d'un rayon lumineux par un échantillon dans une gamme de longueur d'onde comprise entre 800 et 2600 nm et à réaliser une courbe d'étalonnage en identifiant par chimiométrie les différences d'absorbance à différentes longueurs d'onde et les variations d'une propriété P mesurées par une méthode d'analyse chimique ou physico-chimique.

Cette technique de détermination d'une propriété d'un polymère a également été décrite dans les brevets US 5.532.487 et WO 96/16107. Ainsi, dans le brevet US 5.532.487, la méthode d'analyse spectrométrique par Proche Infra Rouge est utilisée pour la détermination des concentrations des fonctions terminales acide et amine dans un polyamide à l'état solide, par exemple sur un fil, ou sur des mélanges diacide / diamine anhydre.

De même, le brevet WO 96/16107 décrit l'utilisation d'une méthode d'analyse spectrométrique Proche Infra Rouge pour déterminer la concentration en fonctions terminales acide et/ou amine dans un polyamide en sortie de réacteur en milieu fondu. Toutefois, dans ces deux exemples le polyamide analysé est sensiblement anhydre.

Dans le procédé de l'invention, cette détermination de la concentration en fonctions terminales acide et/ou amine est réalisée par analyse de la masse réactionnelle contenant l'eau résultant de la réaction d'amidification, par exemple dans une boucle de dérivation du flux principal, dans une dérivation optionnelle du flux principal, ou dans une boucle de recirculation d'un réacteur.

Le procédé de l'invention permet donc de fabriquer un polyamide à partir de diamine et diacide sans utilisation d'eau ou de solvant dans des réacteurs de conception simple et aisément contrôlables.

De plus, comme le contrôle de la stoechiométrie est obtenu par variation de l'alimentation de mélange comprenant soit un faible excès d'acide, soit un faible excès d'amine, les variations du rapport acide / amine seront d'une faible amplitude. Ainsi, le fonctionnement de l'installation est plus constant, sans amplitude de variation élevée.

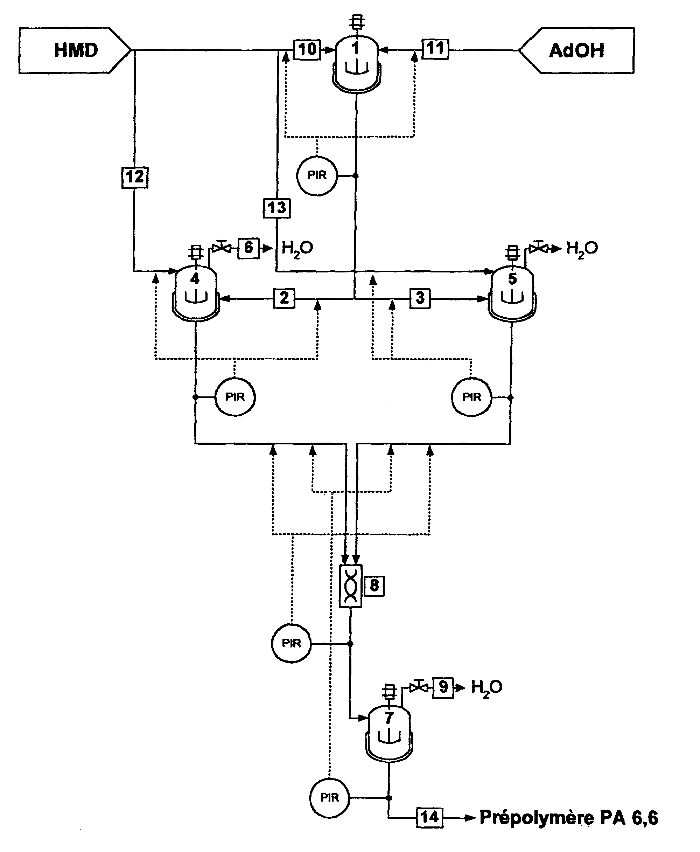

D'autres avantages, détails de l'invention apparaîtront plus clairement au vu de l'exemple donné ci-dessous uniquement à titre indicatif et à la description détaillée réalisée en référence à la figure unique qui représente un schéma synoptique d'une partie du procédé de l'invention.

### Exemple 1

Selon le schéma représenté dans la figure unique, dans un premier réacteur 1 agité sont introduits en continu, respectivement par les conduits 10, 11 une solution aqueuse concentrée d'hexaméthylènediamine de concentration massique en eau égale à 10%, et de l'acide adipique en poudre pour obtenir un mélange dont le rapport pondéral soit de 81 % en monomère diacide et 19 % de monomère diamine. Ce mélange M1 peut contenir une faible quantité d'eau, par exemple de l'ordre de 7 % en poids par rapport au mélange monomère diacide/monomère diamine. Le mélange est maintenu à une température d'environ 126°C.

Le mélange M1 est alimenté par soutirage du réacteur 1 par les conduits 2 et 3 respectivement dans deux réacteurs agités 4 et 5.

Toutefois, dans un mode de réalisation non illustré, le mélange M1 du réacteur 1 peut être alimenté dans un stockeur puis de celui-ci alimenté dans les réacteurs 4 et 5 pour permettre une conduite plus souple du procédé.

Dans l'exemple illustré, le réacteur 4 est maintenu à 228°C sous une pression de 15 bars absolus, le flux de mélange M1 alimenté par la conduite 2 est de 41 kg/h. Dans ce réacteur 4, une solution d'hexaméthylène diamine (HMD) contenant 10 % d'eau est alimentée par le conduit 12 selon un débit contrôlé pour obtenir dans le réacteur 4 un mélange M2 comprenant un rapport des fonctions acides par rapport aux fonctions amines égal à 1,03.

Selon l'invention, ce rapport acide/amine est mesuré en continu dans le réacteur 4 ou comme illustré en sortie de ce réacteur, par une méthode d'analyse Proche Infra rouge décrite ci-dessous. Le résultat de cette analyse est traité par un système d'asservissement qui commande les débits des flux de mélange M1 et de solution de HMD alimentés dans le réacteur 4.

Dans la figure unique les lignes en pointillés représentent d'une part les asservissements des flux aux mesures par PIR et d'autre part, les analyses des compositions des flux par PIR.

Le temps de séjour du mélange dans le réacteur 4 est d'environ 48 minutes. Le réacteur 4 comprend une sortie 6 permettant d'évacuer l'eau contenue et/ou formée dans le réacteur. Le débit d'évacuation de cette eau sous forme de vapeur est de 7,6 kg/h. Le mélange M2 soutiré du réacteur 4 est un mélange acide adipique / HMD préamidifié riche en fonction acide.

Selon l'invention, un second mélange M3 acide adipique / HMD préamidifié est produit dans le réacteur 5, de manière analogue à la fabrication du mélange M2 dans le réacteur 4. Toutefois, le débit des flux de mélange M1 et de solution d'hexaméthylène diamine alimentée par le conduit 13 sont déterminés et contrôlés pour obtenir dans le réacteur 5 un mélange présentant un rapport des fonctions acides par rapport aux fonctions amines égal à 0,98.

Dans l'exemple illustré, les conditions de température et de pression sont identiques à celles du réacteur 4. Toutefois, sans sortir du cadre de l'invention ces conditions peuvent être légèrement différentes.

Comme pour la fabrication du mélange M2, les débits des flux de mélange M1 et de HMD sont asservis au résultat de la mesure en continu du rapport fonction acide/ fonction amine dans le mélange M3, par une méthode d'analyse par Proche Infra Rouge décrite ci-dessous.

Les deux mélanges M2 et M3 issus respectivement, des réacteurs 4 et 5 sont introduits dans un réacteur de polycondensation 7, maintenu à une température de 248°C sous une pression de 17,5 bars absolus.

Dans le mode de réalisation illustré, les deux flux de mélange M2 et M3 sont introduits dans un prémélangeur 8 pouvant être constitué, par exemple, par un ensemble de mélangeurs statiques disposés dans un conduit, ou par tout autre moyen de mélange tel qu'une cuve agitée.

Les débits des flux de mélanges M2 et M3 sont contrôlés pour obtenir dans le réacteur 7 un mélange présentant un rapport fonctions acides / fonctions amines déterminé en fonction des caractéristiques du polyamide à fabriquer.

Ainsi, dans l'exemple illustré, ces débits sont déterminés pour obtenir un mélange dans le réacteur 7 présentant une différence entre les concentrations en fonctions acide et amine (GTC - GTA) en sortie du réacteur 7 voisine de 50 meq/kg.

Selon l'invention, cette différence de concentrations ou le rapport fonctions acides / fonctions amines est mesurée en continu par une méthode d'analyse spectrométrique dans le Proche Infra Rouge, les débits des flux de mélange M2 et M3 introduits dans le prémélangeur 8 étant asservis à cette mesure pour maintenir la valeur de différence entre deux valeurs de consigne.

Le temps de séjour du mélange ou prépolymère dans le réacteur 7 est voisin de 30 minutes. Le réacteur 7 est équipé d'une vanne de détente 9 pour permettre d'évacuer une partie de l'eau formée par la réaction d'amidification. Le flux de vapeur d'eau évacué par la vanne 9 de détente est égal à 4,5 kg/h. Le contrôle de ce débit de vapeur d'eau évacué permet de contrôler le degré d'avancement de la réaction d'amidification et donc le degré de polymérisation du prépolymère soutiré du réacteur 7, et la pression dans celui-ci.

Le débit moyen de soutirage du prépolymère du réacteur 7 par la conduite 14 est de 102 kg/h. Le prépolymère ainsi récupéré possède une masse molaire moyenne en nombre voisine de 3800 et contient environ 5% d'eau.

Le procédé illustré permet de produire, en continu, un prépolymère en sortie du réacteur 7 présentant une concentration en groupes terminaux amines (GTA) égale en moyenne, à 238,2 meq/kg, et une concentration en groupes terminaux acides (GTC) égale en moyenne, à 289,5 meq/kg, c'est à dire une différence entre les concentrations en fonction acide et fonction amine de 51,3 meq/kg, pour une valeur de consigne et désirée de 50 meq/kg.

Le prépolymère ainsi produit est transformé en polyamide de masse molaire désirée et compatible avec les utilisations usuelles par addition dans un flux de fabrication d'un polyamide provenant d'un procédé de fabrication de polyamide 66 à partir de sel adipate d'hexaméthylène diamine.

Les procédés continus et usuels de fabrication de PA 66 décrits par exemple dans l'ouvrage "Polymerisation processes" édition Schildknecht (Wiley interscience, 1977) pp.424 à 467 (chapitre 12 "Preparation of 6,6-Nylon and related potyamides"par Donald B. JACOBS et Joseph ZlMMERMAN), comprennent dans l'étape de finition du polymère, un flasheur, un séparateur vapeur/prépolymère et un finisseur. Le flux de prépolymère obtenu par le procédé de l'invention est ajouté au flux conventionnel de polyamide en amont du flasheur.

L'addition de ce flux de polyamide sortant du procédé conforme à l'invention ne perturbe pas la qualité et les propriétés du polyamide obtenu en sortie des étapes de finition. Ces propriétés sont identiques à celles du polyamide fabriqué sans ce flux additionnel.

Le procédé de l'invention permet donc de fabriquer un polyamide compatible pour être engagés comme matière première dans les utilisations usuelles, telles que fabrication de fils, fibres, films ou fabrication de pièces moulées.

La méthode de mesure d'analyse spectrométrique dans le domaine spectral du Proche Infra-Rouge (PIR) consiste à réaliser sur le mélange réactionnel, une mesure en continu par transmission : l'onde lumineuse est émise par la lampe du spectromètre, véhiculée par fibre optique monobrin jusqu'à la sonde émettrice directement en contact avec le mélange réactionnel. L'information lumineuse est partiellement absorbée par le produit traversé puis captée par la sonde réceptrice rigoureusement alignée avec la sonde émettrice, véhiculée par une seconde fibre optique monobrin puis recueillie par le détecteur du spectromètre. Le logiciel d'acquisition des spectres reconstitue l'ensemble du spectre en transmission pour le transformer en spectre en absorbance. L'acquisition des spectres se fait ainsi dans une gamme de nombres d'onde de 4600 à 9000 cm⁻¹ avec une résolution de 16 cm⁻¹ : chaque spectre résulte de la moyenne de 32 scans réalisés à la vitesse moyenne de 128 scans par minute.

L'information spectrale recueillie par analyse en continu est transcrite en concentration en groupements terminaux acide et amine par kg de produit sec (respectivement GTC et GTA) ainsi qu'en écart GTC-GTA à partir de modèles élaborés par étalonnage avec des échantillons analysés par des méthodes d'analyse potentiométrique, par exemple décrite dans "Encyclopedia of Industrial Chemical Analysis", 1973, volume 17, page 293.

L'ensemble du dispositif de mesure PIR est dimensionné de manière à résister à une pression interne de 150 bars et une température de 300°C. L'ensemble se compose d'une cellule en acier inox 316L et de deux porte-sondes en acier Z30C13.
Le corps de cellule est chauffé électriquement, le chauffage étant régulé par une mesure de température dans la masse métallique ou dans le polymère.

La conduite de circulation du produit analysé est cylindrique, de diamètre 1 cm. Ce flux est intercepté perpendiculairement par les porte-sondes vissés sur les oreilles taraudées du corps de cellule.

Les sondes utilisées sont du type FCP-040 Cross Line Probe fournies par Axiom Analytical Incorporated. Ces sondes sont vissées dans les porte-sondes de manière à réaliser une étanchéité conique métal-métal, le saphir d'environ 8 mm affleurant à l'extrémité du porte-sonde. L'écartement entre la sonde émettrice et la sonde réceptrice se fait ainsi par un réglage symétrique par vissage des deux porte-sondes en vis à vis : il est fixé à 4 mm et reste constant lors des phases de calibration et de prédiction en utilisation continue. Les sondes sont connectées au spectromètre via une fibre optique d'une quinzaine de mètres. Le spectromètre lui-même est relié à un ordinateur en salle de conduite qui reporte en temps réel le résultat de l'analyse on-line.

Ainsi, la mesure réalisée sur les mélanges M2 et M3 en sortie des réacteurs 4 et 5 présente une erreur standard de prédiction de 10,1 meq/kg pour le GTA, 13,0 meq/kg pour le GTC et de 12,7 meq/kg pour la différence GTC-GTA avec des coefficients de corrélation supérieurs à 0,99.

Le degré de précision atteint par cette analyse statistique des spectres PIR permet un ajustement du rapport entre les groupements terminaux acides et amines dans les mélanges M2 et M3 par asservissement des débits des fluides alimentés respectivement dans les réacteurs 4 et 5.

La mesure réalisée en sortie du réacteur 7 présente une erreur standard de prédiction de 4,6 meq/kg pour le GTA, 5,1 meq/kg pour le GTC et de 4,7 meq/kg pour la différence GTC-GTA avec des coefficients de corrélation de 0,990 pour le GTA, 0,991 pour le GTC et 0,995 pour la différence GTC-GTA.

Le degré de précision atteint par cette analyse statistique des spectres PIR permet également un ajustement du rapport entre groupements terminaux acides et amines par asservissement des flux des mélanges M2 et M3 introduits dans le prémélangeur ou le réacteur 7.

De même, cette méthode d'analyse par spectrométrie dans le Proche Infra-Rouge permet également de déterminer la composition du mélange M1 et d'asservir les débits des monomères alimentés dans le réacteur 1.

L'emplacement des sondes dans le procédé peut être différent selon la disposition des réacteurs ou la présence de réacteurs ou unités de stockage.

Le nombre de points d'analyse sur le procédé peut varier de un à plusieurs. Ainsi, il est possible d'avoir uniquement un contrôle de la composition du prépolymère en sortie du réacteur 7 et d'asservir à cette mesure les débits des mélanges M2 et M3 et/ou les débits d'alimentation de la solution de HMD et du mélange M1 dans les réacteurs 4 et 5, sans pour cela sortir du cadre de l'invention. Toutefois, pour un meilleur contrôle du procédé, il est préférable d'avoir un contrôle de la composition de chacun des mélanges M1 à M4 et d'asservir les débits d'introduction des réactifs dans chaque réacteur de fabrication de ces mélanges.

Un exemple de système de contrôle et d'asservissement des débits d'introduction des flux de mélanges dans les différents réacteurs est illustré par des lignes en pointillés dans la figure unique.

Comme indiqué précédemment, le procédé de l'invention s'applique préférentiellement à la fabrication du PA 66, mais il peut être également utilisé pour la fabrication d'autres polyamides obtenus à partir de monomères diacides et diamines, et surtout pour la fabrication de copolyamides comme les copolyamides PA 66/6.

## Revendications

1. Procédé de fabrication d'un polyamide à partir d'au moins un diacide et d'au moins une diamine **caractérisé en ce qu'**il comprend les étapes suivantes :
• préparer un premier mélange M2 de diacide et de diamine avec un rapport molaire diacide/diamine compris entre 1,005 et 1,2,
• préparer un second mélange M3 de diacide et diamine avec un rapport diacide/diamine compris entre 0,8 et 0,995,
• introduire sous forme fondue un flux du premier mélange M2 et un flux du second mélange M3 dans un réacteur de polymérisation agité
• soutirer dudit réacteur un flux de prépolymère et introduire ledit flux dans une étape de finition pour obtenir le degré de polymérisation désiré ;
et **en ce que** le mélange des flux du premier et second mélange est analysé en continu pour déterminer le rapport entre les fonctions acide et amine, et au moins le débit de l'un desdits flux de premier ou second mélange est asservi au résultat de l'analyse pour maintenir un rapport entre les fonctions acide et amine compris entre deux valeurs de consigne déterminées.

2. Procédé selon la revendication 1, **caractérisé en ce que** les flux des premier et second mélanges sont mélangés avant l'introduction dans le réacteur de polymérisation.

3. Procédé selon la revendication 1 ou 2, **caractérisé en ce que** le réacteur de polymérisation fonctionne sous une pression autogène ou une pression régulée.

4. Procédé selon l'une des revendications 2 ou 3, **caractérisé en ce que** l'analyse en continu est réalisée sur le mélange de flux avant l'introduction dans le réacteur de polymérisation.

5. Procédé selon l'une des revendications 1 à 3, **caractérisé en ce que** l'analyse en continu est réalisée sur le mélange contenu dans le réacteur de polymérisation.

6. Procédé selon l'une des revendications 1 à 3, **caractérisé en ce que** l'analyse en continu est réalisée sur le prépolymère soutiré du réacteur de polymérisation.

7. Procédé selon l'une des revendications précédentes, **caractérisé en ce que** les premier et second mélanges M2, M3, sont obtenus par mélange d'une solution de monomère diamine avec un mélange M1 riche en monomère diacide.

8. Procédé selon la revendication 7, **caractérisé en ce que** le débit des flux d'entrée de la solution de monomères diamines et du mélange M1 riche en monomère diacide est asservi au résultat de l'analyse en continu des fonctions acides et amines dans les mélanges M2 et M3.

9. Procédé selon l'une des revendications précédentes, **caractérisé en ce que** les analyses en continu des mélanges ou prépolymère sont réalisées par une méthode d'analyse spectrométrique dans le Proche Infra-Rouge.

10. Procédé selon l'une des revendications précédentes, **caractérisé en ce que** les monomères diacides sont choisis dans la liste comprenant les acides adipique, glutarique, subérique, sébacique, dodécanedioïque, isophtalique, téréphtalique, azétaïque, pimélique.

11. Procédé selon l'une des revendications précédentes, **caractérisé en ce que** les monomères diamines sont choisis dans la liste comprenant l'hexaméthylène diamine, l'heptaméthylène diamine, l'octaméthylène diamine, la nonaméthylène diamine, la décaméthylène diamine, la méthyl-2 pentaméthylène diamine, l'undécaméthytène diamine, la dodécaméthylène diamine, la xylylène diamine.

12. Procédé selon l'une des revendications précédentes, **caractérisé en ce que** le monomère diacide comprend au moins 80% en mole d'acide adipique.

13. Procédé selon l'une des revendications précédentes, **caractérisé en ce que** le monomère diamine comprend au moins 80 % en mole d'hexaméthylène diamine.

14. Procédé selon les revendications 12 et 13, **caractérisé en ce que** les premier et second mélanges sont préparés par addition d'hexaméthylène diamine dans un mélange eutectique acide adipique / hexaméthylène diamine.

15. Procédé selon l'une des revendications précédentes, **caractérisé en ce que** l'étape de finition comprend une étape de détente du flux de polyamide pour évaporation de l'eau et une étape de maintien en température de polymérisation sous pression réduite ou atmosphérique du polymère.

## Claims

1. A process for the manufacture of a polyamide from at least one diacid and from at least one diamine, **characterized in that** it comprises the following stages:
• preparing a first mixture M2 of diacid and of diamine with a diacid/diamine molar ratio of between 1.005 and 1.2,
• preparing a second mixture M3 of diacid and diamine with a diacid/diamine ratio of between 0.8 and 0.995,
• introducing, in the molten form, a stream of the first mixture M2 and a stream of the second mixture M3 into a stirred polymerization reactor,
• withdrawing a stream of prepolymer from said reactor and feeding said stream to a finishing stage in order to obtain the degree of desired polymerization;
and **in that** the mixture of the streams of the first and second mixture is continuously analyzed in order to determine the ratio of the acid functional groups to the amine functional groups, and at least the flow rate of one of said streams of first or second mixture is automatically controlled according to the result of the analysis in order to maintain a ratio of the acid functional groups to the amine functional groups between two predetermined set values.

2. The process as claimed in claim 1, **characterized in that** the streams of the first and second mixtures are mixed before introducing into the polymerization reactor.

3. The process as claimed in claim 1 or 2, **characterized in that** the polymerization reactor operates under an autogenous pressure or a regulated pressure.

4. The process as claimed in either of claims 2 and 3, **characterized in that** the continuous analysis is carried out on the mixture of streams before introducing into the polymerization reactor.

5. The process as claimed in one of claims 1 to 3, **characterized in that** the continuous analysis is carried out on the mixture present in the polymerization reactor.

6. The process as claimed in one of claims 1 to 3, **characterized in that** the continuous analysis is carried out on the prepolymer withdrawn from the polymerization reactor.

7. The process as claimed in one of the preceding claims, **characterized in that** the first and second mixtures M2 and M3 are obtained by mixing a solution of diamine monomer with a mixture M1 rich in diacid monomer.

8. The process as claimed in claim 7, **characterized in that** the flow rate of the entering streams of the solution of diamine monomers and of the mixture M1 rich in diacid monomer is automatically controlled according to the result of the continuous analysis of the acid and amine functional groups in the mixtures M2 and M3.

9. The process as claimed in one of the preceding claims, **characterized in that** the continuous analyses of the mixtures or prepolymer are carried out by a method of spectrometric analysis in the Near InfraRed.

10. The process as claimed in one of the preceding claims, **characterized in that** the diacid monomers are chosen from the list consisting of adipic, glutaric, suberic, sebacic, dodecanedioic, isophthalic, terephthalic, azelaic and pimelic acids.

11. The process as claimed in one of the preceding claims, **characterized in that** the diamine monomers are chosen from the list consisting of hexamethylenediamine, heptamethylenediamine, octamethylenediamine, nonamethylenediamine, decamethylenediamine, 2-methylpentamethylenediamine, undecamethylenediamine, dodecamethylenediamine and xylylenediamine.

12. The process as claimed in one of the preceding claims, **characterized in that** the diacid monomer comprises at least 80 mol% of adipic acid.

13. The process as claimed in one of the preceding claims, **characterized in that** the diamine monomer comprises at least 80 mol% of hexamethylenediamine.

14. The process as claimed in claims 12 and 13, **characterized in that** the first and second mixtures are prepared by addition of hexamethylenediamine to an adipic acid/hexamethylenediamine eutectic mixture.

15. The process as claimed in one of the preceding claims, **characterized in that** the finishing stage comprises a stage of reduction in pressure of the stream of polyamide in order to evaporate the water and a stage of maintaining the polymer at the polymerization temperature under reduced pressure or at atmospheric pressure.

## Patentansprüche

1. Verfahren zur Herstellung eines Polyamids ausgehend von mindestens einer Disäure und mindestens einem Diamin, **dadurch gekennzeichnet, daß** es die folgenden Stufen umfaßt:
• Herstellung einer ersten Mischung M2 von Disäure und Diamin mit einem molaren Verhältnis Disäure/Diamin zwischen 1,005 und 1,2,
• Herstellung einer zweiten Mischung M3 von Disäure und Diamin mit einem Verhältnis Disäure/Diamin zwischen 0,8 und 0,995,
• Eintragen eines Stromes der ersten Mischung M2 und eines Stromes der zweiten Mischung M3 in geschmolzener Form in einen gerührten Polymerisationsreaktor,
• Abziehen eines Stromes von Prepolymer aus dem genannten Reaktor und Eintragen dieses Stromes in eine Stufe der Endverarbeitung, um den gewünschten Polymerisationsgrad zu erhalten;
und dadurch, daß die Mischung der Ströme der ersten und der zweiten Mischung kontinuierlich analysiert wird, um das Verhältnis zwischen den Funktionen Säure und Amin zu bestimmen, und mindestens der Durchsatz von einem der genannten Ströme der ersten oder der zweiten Mischung dem Ergebnis der Analyse unterworfen wird, um ein Verhältnis zwischen den Funktionen Säure und Amin aufrechtzuerhalten, das zwischen zwei Werten der bestimmten Grenzen liegt.

2. Verfahren nach Anspruch 1, **dadurch gekennzeichnet, daß** die Ströme der ersten und der zweiten Mischung vor dem Eintragen in den Polymerisationsreaktor vermischt werden.

3. Verfahren nach Anspruch 1 oder 2, **dadurch gekennzeichnet, daß** der Polymerisationsreaktor unter einem autogenen Druck oder unter einem geregelten Druck arbeitet.

4. Verfahren nach einem der Ansprüche 2 oder 3, **dadurch gekennzeichnet, daß** die kontinuierliche Analyse an der Mischung des Stromes vor dem Eintragen in den Polymerisationsreaktor durchgeführt wird.

5. Verfahren nach einem der Ansprüche 1 bis 3, **dadurch gekennzeichnet, daß** die kontinuierliche Analyse an der Mischung durchgeführt wird, die in dem Polymerisationsreaktor enthalten ist.

6. Verfahren nach einem der Ansprüche 1 bis 3, **dadurch gekennzeichnet, daß** die kontinuierliche Analyse an dem aus dem Polymerisationsreaktor abgezogenen Prepolymer durchgeführt wird.

7. Verfahren nach einem der vorstehenden Ansprüche, **dadurch gekennzeichnet, daß** die erste Mischung M2 und die zweite Mischung M3 durch Vermischen einer Lösung von Diamin-Monomer mit einer Mischung M1 erhalten werden, die reich an Disäure-Monomer ist.

8. Verfahren nach Anspruch 7, **dadurch gekennzeichnet, daß** der Durchsatz der Eintritts-Ströme der Lösung von Diamin-Monomeren und der Mischung M1, die reich an Disäure-Monomer ist, dem Ergebnis der kontinuierlichen Analyse der Funktionen Säure und Amin in den Mischungen M2 und M3 unterworfen wird.

9. Verfahren nach einem der vorstehenden Ansprüche, **dadurch gekennzeichnet, daß** die kontinuierlichen Analysen der Mischungen oder des Prepolymers mit Hilfe einer Methode zur spektrometrischen Analyse im nahen Infrarot-Bereich realisiert werden.

10. Verfahren nach einem der vorstehenden Ansprüche, **dadurch gekennzeichnet, daß** die Disäure-Monomeren aus der Liste gewählt werden, die Adipinsäure, Glutarsäure, Suberinsäure, Sebacinsäure, Dodecandisäure, Isophthalsäure, Terephthalsäure, Azelainsäure und Pimelinsäure umfaßt.

11. Verfahren nach einem der vorstehenden Ansprüche, **dadurch gekennzeichnet, daß** die Diamin-Monomeren aus der Liste gewählt werden, die Hexamethylendiamin, Heptamethylendiamin, Octamethylendiamin, Nonamethylendiamin, Decamethylendiamin, 2-Methyl-pentamethylendiamin, Undecamethylendiamin, Dodecamethylendiamin und Xylylendiamin umfaßt.

12. Verfahren nach einem der vorstehenden Ansprüche, **dadurch gekennzeichnet, daß** das Disäure-Monomer mindestens 80 Mol-% Adipinsäure umfaßt.

13. Verfahren nach einem der vorstehenden Ansprüche, **dadurch gekennzeichnet, daß** das Diamin-Monomer mindestens 80 Mol-% Hexamethylendiamin umfaßt.

14. Verfahren nach Anspruch 12 und 13, **dadurch gekennzeichnet, daß** die erste und die zweite Mischung durch Zugabe von Hexamethylendiamin zu einer eutektischen Mischung Adipinsäure/Hexamethylendiamin hergestellt werden.

15. Verfahren nach einem der vorstehenden Ansprüche, **dadurch gekennzeichnet, daß** die Stufe der Endverarbeitung eine Stufe der Entspannung des Polyamidstromes umfaßt, um das Wasser zu verdampfen, sowie eine Stufe zum Halten des Polymers bei der Polymerisationstemperatur unter reduziertem oder atmosphärischem Druck.
